(19) Europäisches Patentamt / European Patent Office / Office européen des brevets

(11) **EP 3 881 406 B1**

(12) **EUROPÄISCHE PATENTSCHRIFT**

(45) Veröffentlichungstag und Bekanntmachung des Hinweises auf die Patenterteilung:
**05.07.2023   Patentblatt 2023/27**

(21) Anmeldenummer: **20706390.0**

(22) Anmeldetag: **06.02.2020**

(51) Internationale Patentklassifikation (IPC):
**H02J 1/06** (2006.01)   **H02J 1/10** (2006.01)
**H02J 1/14** (2006.01)   **H02J 3/36** (2006.01)

(52) Gemeinsame Patentklassifikation (CPC):
**H02J 1/102; H02J 1/06; H02J 1/14; H02J 3/36;**
Y02E 60/60

(86) Internationale Anmeldenummer:
**PCT/EP2020/052967**

(87) Internationale Veröffentlichungsnummer:
**WO 2020/165014 (20.08.2020 Gazette 2020/34)**

(54) **GLEICHSPANNUNGSNETZ MIT VARIABLER SPANNUNG**

DC NETWORK WITH VARIABLE VOLTAGE

RÉSEAU À TENSION CONTINUE À TENSION VARIABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.02.2019   EP 19157506**

(43) Veröffentlichungstag der Anmeldung:
**22.09.2021   Patentblatt 2021/38**

(73) Patentinhaber: **Siemens Aktiengesellschaft**
**80333 München (DE)**

(72) Erfinder: **GAUDENZ, Markus Matthias**
**91056 Erlangen (DE)**

(74) Vertreter: **Siemens Patent Attorneys**
**Postfach 22 16 34**
**80506 München (DE)**

(56) Entgegenhaltungen:
| | |
|---|---|
| EP-A1- 3 314 715 | EP-B1- 3 314 715 |
| US-A1- 2016 018 837 | US-A1- 2016 336 746 |
| US-A1- 2017 180 006 | US-B1- 6 624 533 |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Gleichspannungsnetz, wobei das Gleichspannungsnetz mit einer Gleichspannung betreibbar ist. Ferner betrifft die Erfindung einen Windpark sowie ein Verfahren zum Betreiben eines derartigen Gleichspannungsnetzes oder Windparks.

Bei einem Energieverteilungsnetz wird elektrischen Verbrauchern elektrische Energie bereitgestellt. Dabei liegt an den Versorgungsleitungen, auch allgemein als Leiter bezeichnet, des Energieverteilungsnetzes eine Spannung an. Bei Anschluss eines Verbrauchers kann dieser den Versorgungsleitungen einen Strom entnehmen. Dabei wird elektrische Energie innerhalb des Energieverteilungsnetzes verteilt. Bei der Spannung kann es sich um eine Wechselspannung eines Wechselspannungsnetzes oder um die Gleichspannung eines Gleichstromnetzes, auch als DC-Netz bezeichnet, handeln.

US 6 624 533 B1 offenbart ein Gleichspannungsnetz das eine Steuereinheit mit Steuerleitungen braucht um die elektrischen Komponenten über dem Netzzustand zu informieren.

US 2016/018837 offenbart auch ein Gleichspannungsnetz das eine Steuereinheit braucht um die elektrischen Komponenten über dem Netzzustand zu informieren. Der Steuereinheit kommuniziert mit den elektrischen Komponenten über PLC Kommunikation, die an dem Gleichspannungsnetz angeschlossen sind, d.h. die Kommunikation wird mit AC Spannung an die DC Leitungen angebracht so dass die Komponenten sie entnehmen können.

Heutzutage sind Energieverteilungsnetze als Wechselspannungsnetze ausgebildet. Diese bieten die Möglichkeit, auf einfache Weise mittels Transformatoren unterschiedliche Spannungsebenen zu generieren. Bei einem DC Netz wird der Einfachheit halber die Gleichspannung auf einen konstanten Wert gehalten und den Verbrauchern zur Verfügung gestellt. Dafür wird meistens der maximal zulässige Nominalwert zugrunde gelegt. Damit können die elektrischen Verbraucher bei konstanter Leistung mit einem geringen Strom versorgt werden. Elektrische Verluste sind dabei aufgrund des geringen Stroms gering.

Der Erfindung liegt die Aufgabe zugrunde, ein Gleichspannungsnetz zu verbessern.

Diese Aufgabe wird durch ein Gleichspannungsnetz mit den Merkmalen des Anspruchs 1 gelöst. Ferner wird diese Aufgabe durch einen Windpark mit den Merkmalen des Anspruchs 6 sowie durch ein Verfahren zum Betreiben eines derartigen Gleichspannungsnetzes oder Windparks mit den Merkmalen des Anspruchs 7 gelöst.

Weitere vorteilhafte Ausgestaltungen der Erfindung sind in den abhängigen Ansprüchen angegeben.

Der Erfindung liegt die Erkenntnis zugrunde, dass sich das Gleichspannungsnetz dadurch verbessern lässt, dass die Spannung des Gleichspannungsnetzes variabel ist und den Zustand des Gleichspannungsnetzes wiedergibt. Die Erfindung betrifft die Ausgestaltung der Spannungsregelung in dem Gleichspannungsnetz. Es geht darum, einen Zustand oder mehrere Zustände des Gleichspannungsnetzes anhand der Gleichspannung des Netzes zu beschreiben. Somit ist dann jedem Verbraucher, jeder Quelle und jedem Speicher der Zustand des Gleichspannungsnetzes unmittelbar bekannt und kann darauf angemessen und beispielsweise stabilisierend reagieren.

Bei dem Gleichspannungsnetz werden die daran angeschlossenen elektrischen Komponenten mittels eines Leiters elektrisch verbunden. Bei dem Leiter kann es sich beispielsweise um Kabel oder Stromschienen handeln. Der Leiter weist dabei bei einem Gleichspannungsnetz mindestens zwei Teile auf, zwischen denen die Gleichspannung des Gleichspannungsnetzes anliegt.

Durch den Betrag der Gleichspannung lässt sich auf einfache Weise der Zustand des Gleichspannungsnetzes beschreiben. Liegt beispielsweise ein Überangebot an erzeugter Energie vor oder weisen die Energiespeicher, die mit dem Gleichspannungsnetz verbunden sind, einen hohen Füllstand (SoC State of Charge) auf, so steigt die Netzspannung. Das geschieht dadurch, dass der Steller die Gleichspannung im Gleichspannungsnetz anhebt. Damit wird beispielsweise der Zustand ausgedrückt, dass das Netz eine gute Abgabefähigkeit von Energie und Leistung aufweist. Andererseits soll durch eine niedrige Gleichspannung ausgedrückt werden, dass die Abgabefähigkeit von elektrischer Energie beschränkt ist. Die elektrischen Verbraucher können auf diese Zustände durch ein angepasstes Betriebsverhalten angemessen darauf reagieren.

Eine hohe Gleichspannung zeigt den Energiequellen, dass sie ihre erzeugte Leistung reduzieren können oder den Energiespeichern, dass sie Energie aus dem Netz aufnehmen sollen. Alternativ oder ergänzend kann ein hoher Füllgrad der Energiespeicher auch durch eine hohe Spannung im Gleichspannungsnetz ausgedrückt werden. Dies zeigt den Quellen an, ihre erzeugte Leistung zu reduzieren, um das Netz vor Ausfall durch ein Überangebot von elektrischer Energie zu schützen.

Denkbar sind auch ein erster oberer Schwellwert, bei dem die Energiespeicher Energie aufnehmen sollen und ein darüber liegender zweiter oberer Schwellwert, bei dem die Energieerzeuger ihre erzeugte Leistung (evtl. zu Lasten des Wirkungsgrades) reduzieren. Das gleiche gilt für ein zu geringes Angebot an elektrischer Energie. Ab einem ersten unteren Schwellwert werden die Energieerzeuger dazu aufgefordert, ihre erzeugte Leistung zu erhöhen und ab einem unteren zweiten Schwellwert speisen die Energiespeicher elektrische Energie in das Energieverteilungsnetz ein. Dabei kann der erste untere Schwellwert kleiner oder größer sein als der zweite untere Schwellwert. Darüber hinaus kann auch ein weiterer unterer Schwellwert eingeführt werden, bei dem die elektrischen Verbraucher ihre aufgenommene Leistung reduzieren.

Auf eine übergeordnete Steuerung/Regelung kann verzichtet werden, die dafür sorgt, dass den Verbrauchern hinreichend elektrische Energie zur Verfügung steht und das Gleichspannungsnetz vor Überlastung schützt. Jede elektrische Komponente des Gleichspannungsnetzes, sei es Verbraucher, Erzeuger oder Speicher ist durch die Höhe der Netzspannung über den Zustand des DC Netzes informiert und kann so gezielt zur Stabilität des DC Netzes beitragen.

Besonders vorteilhaft ist es, wenn sich aufgrund des Zustands des Gleichspannungsnetzes das Betriebsverhalten der elektrischen Komponenten ändert. Die Information über einen oder mehrere Zustände im Gleichspannungsnetz kann dazu genutzt werden, Schutzeinrichtungen zu aktivieren oder das Betriebsverhalten zu optimieren. Beispielsweise können dadurch Energiespeicher optimal genutzt werden und/oder die Lebensdauer der aller oder zumindest eines Teils der elektrischen Komponenten zu erhöhen. Ebenso ist es beispielsweise in einer Produktion möglich, den Output an produzierten Einheiten zu maximieren.

Durch die vorgeschlagene Vorrichtung bzw. durch das vorgeschlagene Verfahren ist es möglich, einen sicheren Schutz des Gleichspannungsnetzes zu erreichen und gleichzeitig die Versorgungssicherheit der elektrischen komponenten zu erhöhen.

Besonders vorteilhaft ist die Anwendung des vorgeschlagenen Gleichspannungsnetzes für einen Windpark mit einer Vielzahl von Windenergieanlagen. Erreicht das Gleichspannungsnetz, über das die einzelnen Windenergieanlagen miteinander verbunden sind, seine Kapazitätsgrenze, so kann dies über Variation der Spannung den einzelnen Windenergieanlagen mitgeteilt werden, die dann auf Grundlage dieser Information ihre eingespeiste Leistung beispielsweise durch die Verstellung ihrer Flügel (Pitchverstellung) reduzieren. Ebenso kann ein sich abzeichnender zukünftiger kritischer Netzzustand, beispielsweise aufgrund von Windprognosen bereits als Zustand des Gleichspannungsnetzes berücksichtigt werden und über die Gleichspannung an die Windenergieanlagen übertragen werden. Diese Kommunikation ist sehr sicher und eignet sich insbesondere für den Schutz von Windenergieanlagen, die aufgrund ihres hohen Gefährdungspotentials im Fehlerfall hohe Anforderungen an eine sicher Übertragen von Daten haben.

Ebenso ist die Anwendung des Gleichspannungsnetzes in einem Fahrzeug besonders vorteilhaft, da auch dort eine sichere Kommunikation sichergestellt werden kann und ein sicherer Betrieb des Fahrzeugs realisiert werden kann. Ebenso kann beispielsweise durch Anpassung des Betriebsverhaltens wie beispielsweise seines Beschleunigungsvermögens, die Ausnutzung der Energiespeicher und damit die Reichweite des Fahrzeugs erhöht werden.

Der Steller kann als DC/DC Steller ausgebildet sein, um eine vorhandene Gleichspannung in eine variable Gleichspannung des Gleichspannungsnetzes umzuwandeln. Allerdings ist es alternativ oder ergänzend auch möglich, das Gleichspannungsnetz aus einem Wechselspannungsnetz wie einem Energieversorgungsnetz oder einem Drehstromgenerator zu versorgen. In diesem Fall kommt dann ein Stromrichter, auch als AC/DC Steller bezeichnet, zum Einsatz. Ebenso ist es möglich, eine Kombination aus DC/DC Steller und Stromrichter vorzusehen.

Bei einer vorteilhaften Ausgestaltung der Erfindung stellt eine der elektrischen Komponenten eine Schutzeinrichtung des Gleichspannungsnetzes dar. Für eine Schutzeinrichtung eignet sich die Kommunikation über den Zustand des Gleichspannungsnetzes besonders, da diese Kommunikation sehr sicher ist. Der Zustand wird beim Betrieb dauerhaft übermittelt und ist im Vergleich zu Datenübertragungen auch unempfindlich gegenüber Störungen. Und bei Ausfall der Gleichspannung, d.h. der Kommunikation, wird im Gleichspannungsnetz keine Energie mehr verteilt und die elektrischen Komponenten gehen dadurch in den sicheren Zustand über.

Bekannte Datenübertragungen unterliegen gerade im industriellen Umfeld mit beispielsweise Stromrichtern als elektrische Verbraucher einem hohen Maß an elektromagnetischen Störgrö-βen. Bei der Realisierung von Datenübertragungen, beispielsweise in Form eines Bussystems müssen Maßnahmen zur Sicherung gegenüber diesen Störungen ergriffen werden. Zudem muss auch ein sicherer Betrieb bei Ausfall der Datenleitung realisierbar sein. Dies ist bei der vorgeschlagenen Lösung bereits konstruktiv erreicht, da mit Ausfall der Gleichspannung auch die Versorgung der elektrischen Verbraucher sicher unterbrochen ist.

Bei der Schutzeinrichtung kann es sich beispielsweise um einen Bremswiderstand handeln, der überschüssige Energie des Gleichspannungsnetzes in Wärme umwandelt. Das Ansteuern, auch Aktivieren, des Bremswiderstandes kann besonders einfach und damit sicher mittels eines Komparators geschehen, der die Gleichspannung im Gleichspannungsnetz mit einem Grenzwert vergleicht. Wird der Grenzwert Überschritten oder Unterschritten kann die Schutzeinrichtung, beispielsweise der Bremssteller, aktiviert werden.

Bei einer weiteren vorteilhaften Ausgestaltung der Erfindung ist die Schutzeinrichtung in einem Abstand von mehr als 10m, insbesondere in einem Abstand von mehr als 100m, zu den übrigen elektrischen Komponenten angeordnet. Durch die Kommunikation über die Versorgungsspannung kann die Kommunikation auch über weite Strecken sicher erfolgen. Insbesondere kann die Schutzeinrichtung, beispielsweise zur Verbesserung der Kühlung, außerhalb eines Gebäudes angeordnet sein. Beispielsweise kann ein Bremswiderstand in einem flüssigen Kühlmedium angeordnet sein, so dass eine gute Wärmeabgabe an die Umgebung gewährleistet ist. Gerade auch die einfache Ansteuerbarkeit, beispielsweise wie oben beschrieben mittels eines Komparators, erlaubt die Anordnung in einem flüssigen Kühlmedium.

Bei einer weiteren vorteilhaften Ausgestaltung der Erfindung umfassen die elektrischen Komponenten, einen Energiespeicher und einen elektrischen Verbraucher umfassen. Gerade für den Fall, bei dem Energiespeicher und Verbraucher, sowie gegebenenfalls auch noch Energiequellen zusammenwirken, kann ein Austausch über den Energieinhalt der Energiespeicher vorteilhaft sein, um das Betriebsverhalten zu optimieren und ein Leerlaufen der Energiespeicher zu verhindern.

Bei einer weiteren vorteilhaften Ausgestaltung der Erfindung wird die Gleichspannung mit steigendem Füllgrad der Energiespeicher angehoben. Der Füllgrad eines Energiespeichers wird oftmals als SoC (State of Charge) angegeben. Es kann über den Füllgrad aller im Gleichspannungsnetz befindlicher Energiespeicher ein mittlerer Füllgrad ermittelt werden. Dieser Mittelwert kann dabei noch mit der durch den entsprechenden Energiespeicher speicherbaren Energiemenge gewichtet werden. Je höher dieser Wert ist desto höher wird die Gleichspannung im Netz gesteuert oder geregelt. Den elektrischen Verbrauchern wird mit der hohen Gleichspannung die hohe Leistungsfähigkeit des Gleichspannungsnetzes gezeigt.

Bei einer weiteren vorteilhaften Ausgestaltung der Erfindung wird wobei die Gleichspannung mit sinkender Auslastung der Energiequellen angehoben. Je geringer die Auslastung der Energiequellen ist, desto größer ist die Fähigkeit, Leistung in das Gleichspannungsnetz zu liefern. Unter Auslastung der Energiequelle ist das Verhältnis von eingespeister Leistung zu maximal einspeisbarer Leistung der entsprechenden Energiequelle gemeint. Somit wird bei einer niedrigen Auslastung der Energiequellen der Betrag der Spannung heraufgesetzt.

Bei einer weiteren vorteilhaften Ausgestaltung der Erfindung wird bei Überschreiten eines ersten Grenzwertes ein Teil der Energiequellen des Gleichspannungsnetzes abgeschaltet. Hierbei handelt es sich um eine Maßnahme, wie die Information über den Zustand des Gleichspannungsnetz vorteilhaft für den Betrieb des Gleichspannungsnetzes genutzt werden kann. Wenn die Lieferfähigkeit von elektrischer Leistung derart groß ist, dass diese einen ersten Grenzwert überschreitet, können einzelne Energiequellen abgeschaltet werden. Dies ist unter anderem auch dann möglich, wenn die Energiespeicher einen hohen Füllgrad, beispielsweise oberhalb von 80%, aufweisen. Durch das Abschalten von Energiequellen wird das Gleichspannungsnetz wirtschaftlich betrieben, da mit höherer Auslastung der Energiequellen auch oftmals ein höherer Wirkungsgrad verbunden ist.

Bei einer weiteren vorteilhaften Ausgestaltung der Erfindung wird bei Unterschreiten eines zweiten Grenzwertes zumindest ein Teil der Energiespeicher entladen. Wenn die Gleichspannung niedrig ist und unter einen zweiten Grenzwert abfällt, lässt das darauf schließen, dass das Angebot an Leistung von den Energiequellen nicht ausreicht, um den Bedarf der elektrischen Verbraucher zu decken. In diesem Fall ist es vorteilhaft, die Energiespeicher zu entladen und damit den elektrischen Verbrauchern zusätzlich Energie im Gleichspannungsnetz bereitzustellen. Dies wirkt sich stabilisierend auf das Zusammenspiel von Energiequellen und elektrischen Verbrauchern aus.

Bei einer weiteren vorteilhaften Ausgestaltung der Erfindung wird bei Unterschreiten eines dritten Grenzwertes ein Teil der elektrischen Verbraucher mit reduzierter Leistung betrieben oder abgeschaltet. Wenn die gelieferte Leistung hinter dem Bedarf der Verbraucher zurückbleibt und auch schon die Energiequellen mit einer hohen Auslastung von beispielsweise mehr als 90% oder sogar 100% betrieben werden, dann ist es vorteilhaft, wenn die elektrischen Verbraucher diesen Zustand anhand des Betrages der Gleichspannung erkennen und ihre Leistung reduzieren. Sollte das nicht ausreichen, können diese, beispielsweise bei Unterschreiten eines weiteren Grenzwertes, auch abgeschaltet werden.

Im Folgenden wird die Erfindung anhand der in den Figuren dargestellten Ausführungsbeispiele näher beschrieben und erläutert. Es zeigen:

FIG 1    ein Gleichspannungsnetz,
FIG 2    den Zusammenhang zwischen Füllgrad des Energiespeichers und erstem Spannungsanpassungsfaktor und
FIG 3    den Zusammenhang zwischen Auslastung der Energiequellen und zweitem Spannungsanpassungsfaktor.

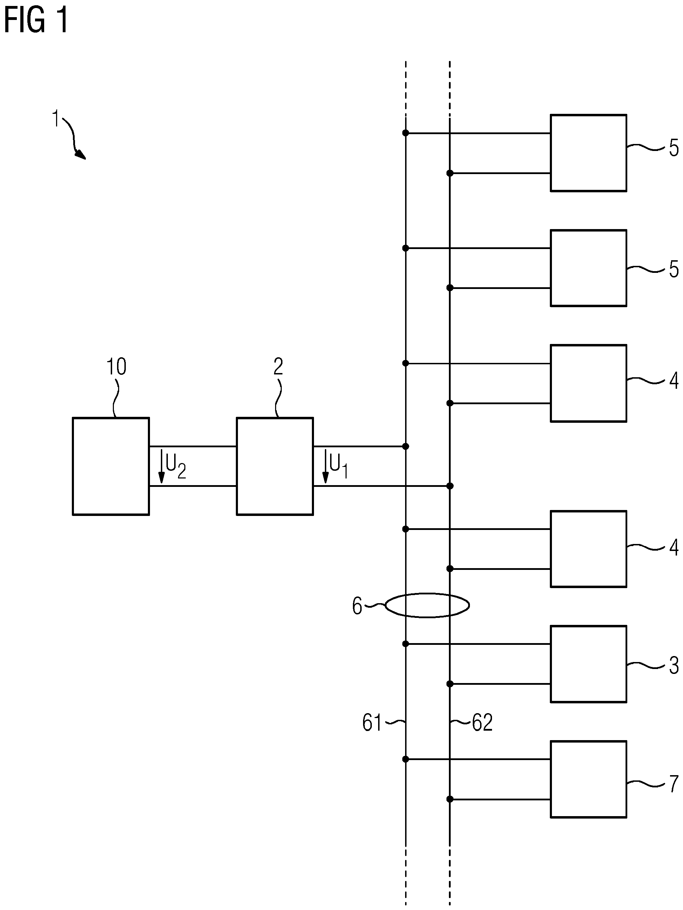

Die FIG 1 zeigt ein Ausführungsbeispiel für ein Gleichspannungsnetz 1. Dieses weist eine oder mehrere Energiequellen 3, und elektrische Verbraucher 5 auf. Zusätzlich kann das Gleichspannungsnetz 1 auch Energiespeicher 4 und eine Schutzeirichtung 7 aufweisen. Die Gleichspannung $U_1$ des Gleichspannungsnetzes 1 ist variabel und liegt zwischen den beiden Teilen 61, 62 des Leiters 6 an, der die einzelnen elektrischen Komponenten 3, 4, 5, 7 miteinander verbindet. Diese Gleichspannung $U_1$ kann durch den Steller 2 angepasst, d.h. variiert, werden, um den Zustand des Gleichspannungsnetzes 1 zu beschreiben. Gespeist wird der Steller 2 aus einer Spannungsquelle 10 mit einer Spannung $U_2$. Bei der Spannungsquelle handelt es sich um eine Energiequelle, die über den Steller 2 die Gleichspannung $U_1$ im Gleichspannungsnetz 1 vorgibt. Diese Spannungsquelle 10 kann beispielsweise durch ein Energieversorgungsnetz gebildet werden, dem Energie zur Speisung der elektrischen Verbraucher 5 entnommen wird oder in das Energie von Windenergieanlagen eingespeist wird. Ebenso kann es sich um einen Generator eines Fahrzeugs handeln.

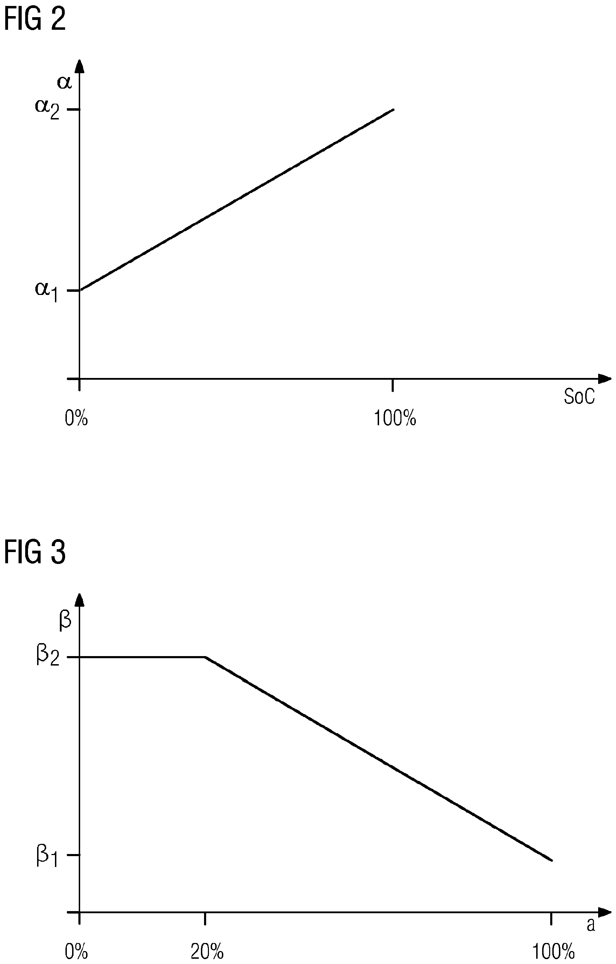

Die FIG 2 zeigt ein Diagramm für die Anpassung der Gleichspannung $U_1$ in Abhängigkeit vom Füllgrad SoC des Energiespeichers 4. Je voller der Energiespeicher 4, desto höher der erste Spannungsanhebungsfak-

tor $\alpha$. Die Gleichspannung $U_1$ ergibt aus der Spannung $U_2$ der Spannungsquelle 10 durch Multiplikation mit dem ersten Spannungsanpassungsfaktor $\alpha$ zu

$$U_1 = U_2 \cdot \alpha .$$

Dabei kann der Zusammenhang zwischen Füllgrad SoC und erstem Spannungsanpassungsfaktor $\alpha$ linear sein, kann aber auch durch jede andere monotone Funktion gebildet werden.

Die FIG 3 zeigt ein Diagramm für die Anpassung der Gleichspannung $U_1$ in Abhängigkeit von der Auslastung a der Energiequellen 3. Je geringer die Auslastung der Energiequellen, desto höher der zweite Spannungsanhebungsfaktor $\beta$. Die Gleichspannung $U_1$ ergibt aus der Spannung $U_2$ der Spannungsquelle 10 durch Multiplikation mit dem zweiten Spannungsanpassungsfaktor $\beta$ zu

$$U_1 = U_2 \cdot \beta .$$

Dabei kann der Zusammenhang zwischen Auslastung a und zweitem Spannungsanpassungsfaktor $\beta$ linear sein, kann aber auch durch jede andere monotone Funktion gebildet werden. Dabei kann es vorteilhaft sein, wenn über einen bestimmten Bereich der Auslastung a der zweite Spannungsanpassungsfaktor $\beta$ konstant ist.

Wird sowohl ein erster als auch ein zweiter Spannungsanpassungsfaktor durch Einbeziehung des Füllgrades SoC und der Auslastung a verwendet, so ergibt sich die Gleichspannung $U_1$ aus der Spannung $U_2$ der Spannungsquelle 10 durch Multiplikation mit dem ersten Spannungsanpassungsfaktor $\alpha$ und dem zweiten Spannungsanpassungsfaktor $\beta$ zu

$$U_1 = U_2 \cdot \alpha \cdot \beta .$$

Die einzelnen Werte $\alpha_1$, $\alpha_2$, $\beta_1$, $\beta_2$ des ersten und zweiten Spannungsanpassungsfaktors ergeben sich durch die Auslegung des Gleichspannungsnetzes 1. Dabei ist zu berücksichtigen, dass durch die Werte $\alpha_1$, $\alpha_2$, $\beta_1$, $\beta_2$ das Gleichspannungsnetz 1 weder spannungsmäßig noch strommäßig überlastet wird.

Zusammenfassend betrifft die Erfindung ein Gleichspannungsnetz, wobei das Gleichspannungsnetz mit einer Gleichspannung betreibbar ist. Zur Verbesserung des Gleichspannungsnetzes wird vorgeschlagen, dass das Gleichspannungsnetz einen Steller aufweist, mit dem die Gleichspannung des Gleichspannungsnetzes variierbar ist, wobei der Betrag der Gleichspannung vom Zustand der Energiequellen und/oder der Energiespeicher und/oder der elektrischen Verbraucher abhängt. Ferner betrifft die Erfindung ein Verfahren zum Betreiben eines derartigen Gleichspannungsnetzes, wobei die Gleichspannung des Gleichspannungsnetzes in Abhängigkeit vom Zustand der Energiequellen und/oder der Energiespeicher und/oder der elektrischen Verbraucher gesteuert oder geregelt wird.

Mit anderen Worten betrifft die Erfindung ein Gleichspannungsnetz aufweisend elektrische Komponenten, die mittels eines Leiters miteinander elektrisch verbunden sind, wobei das Gleichspannungsnetz mit einer Gleichspannung zwischen Teilen des Leiters betreibbar ist. Zur Verbesserung des Gleichspannungsnetzes wird vorgeschlagen, dass das Gleichspannungsnetz einen Steller aufweist, mit dem die Gleichspannung des Gleichspannungsnetzes derart variierbar ist, dass der Wert der Gleichspannung von mindestens einem Zustand des Gleichspannungsnetzes abhängt und eine Information über den Zustand mittels der Gleichspannung an die elektrischen Komponenten des Gleichspannungsnetzes übertragen wird. Ferner betrifft die Erfindung einen Windpark mit einem derartigen Gleichspannungsnetz mit Windenergieanlagen. Die Erfindung betrifft weiter ein Verfahren zum Betreiben eines derartigen Gleichspannungsnetzes oder eines derartigen Windparks, wobei die Gleichspannung des Gleichspannungsnetzes in Abhängigkeit von einem Zustand des Gleichspannungsnetzes gesteuert oder geregelt wird.

**Patentansprüche**

1. Gleichspannungsnetz (1) aufweisend elektrische Komponenten (3,4,5,7), die mittels eines Leiters (6) miteinander elektrisch verbunden sind, wobei das Gleichspannungsnetz (1) mit einer Gleichspannung ($U_1$) zwischen Teilen (61,62) des Leiters (6) betreibbar ist, wobei das Gleichspannungsnetz (1) einen Steller (2) aufweist, mit dem die Gleichspannung ($U_1$) des Gleichspannungsnetzes (1) derart variierbar ist, dass der Wert der Gleichspannung ($U_1$) von mindestens einem Zustand des Gleichspannungsnetzes (1) abhängt und eine Information über den Zustand mittels der Gleichspannung ($U_1$) an die elektrischen Komponenten (3,4,5,7) des Gleichspannungsnetzes (1) übertragen wird.

2. Gleichspannungsnetz (1) nach Anspruch 1, wobei eine der elektrischen Komponenten (3,4,5,7) eine Schutzeinrichtung (7) des Gleichspannungsnetzes (1) darstellt.

3. Gleichspannungsnetz (1) nach Anspruch 2, wobei die Schutzeinrichtung (7) in einem Abstand von mehr als 10m, insbesondere in einem Abstand von mehr als 100m, zu den übrigen elektrischen Komponenten (3,4,5,7) angeordnet ist.

4. Gleichspannungsnetz (1) nach einem der Ansprüche 1 bis 3, wobei die elektrischen Komponenten (3,4,5,7), einen Energiespeicher (4) und einen elektrischen Verbraucher (5) umfassen.

**5.** Gleichspannungsnetz (1) nach einem der Ansprüche 1 bis 4, wobei zumindest ein Teil der elektrischen Komponenten durch Windenergieanlagen als Energiequellen (3) gebildet werden, wobei die Windenergieanlagen jeweils eine Flügelverstellung aufweist, dessen Regelung eingerichtet ist, die Flügel in Abhängigkeit des Wertes der Gleichspannung ($U_1$) zu verstellen.

**6.** Windpark mit einem Gleichspannungsnetz (1) nach Anspruch 5.

**7.** Verfahren zum Betreiben eines Gleichspannungsnetzes (1) nach einem der Ansprüche 1 bis 5 oder eines Windparks nach Anspruch 6, wobei die Gleichspannung ($U_1$) des Gleichspannungsnetzes (1) in Abhängigkeit von einem Zustand des Gleichspannungsnetzes (1) gesteuert oder geregelt wird.

**8.** Verfahren nach Anspruch 7, wobei in Abhängigkeit des Wertes der Gleichspannung ($U_1$) das Betriebsverhalten zumindest eines Teils der elektrischen Komponenten (3,4,5,7) verändert wird.

**9.** Verfahren nach einem der Ansprüche 7 oder 8, wobei das Gleichspannungsnetz (1) einen Energiespeicher (4) gemäß Anspruch 4 aufweist, wobei die Gleichspannung ($U_1$) mit steigendem Füllgrad (SoC) des Energiespeicher (4) angehoben wird.

**10.** Verfahren nach einem der Ansprüche 7 bis 9, wobei das Gleichspannungsnetz (1) eine Energiequelle (3), insbesondere eine Windenergieanlage gemäß Anspruch 5, aufweist, wobei die Gleichspannung ($U_1$) mit sinkender Auslastung der Energiequelle (3) angehoben wird.

**11.** Verfahren nach einem der Ansprüche 7 bis 10, wobei bei Überschreiten eines ersten Grenzwertes ein Teil der Energiequellen (3) des Gleichspannungsnetzes (1) abgeschaltet wird.

**12.** Verfahren nach einem der Ansprüche 7 bis 11, wobei bei Unterschreiten eines zweiten Grenzwertes zumindest ein Teil der Energiespeicher (4) entladen wird.

**13.** Verfahren nach einem der Ansprüche 7 bis 12, wobei bei Unterschreiten eines dritten Grenzwertes ein Teil der elektrischen Verbraucher (5) mit reduzierter Leistung betrieben oder abgeschaltet wird.

**14.** Verfahren nach einem der Ansprüche 7 bis 13, wobei bei Überschreiten oder Unterschreiten eines Sicherheitsgrenzwertes der Gleichspannung ($U_1$) die Schutzeinrichtung (7) gemäß Anspruch 2 aktiviert wird.

**15.** Verfahren nach einem der Ansprüche 7 bis 14, wobei die Flügel der Windenergieanlage gemäß Anspruch 5 in Abhängigkeit des Wertes der Gleichspannung ($U_1$) verstellt werden.

## Claims

**1.** DC voltage grid (1) having electrical components (3, 4, 5, 7) which are interconnected electrically by way of a conductor (6), wherein the DC voltage grid (1) is able to be operated with a DC voltage ($U_1$) between parts (61, 62) of the conductor (6), wherein the DC voltage grid (1) has an actuator (2) by way of which the DC voltage ($U_1$) of the DC voltage grid (1) is able to be varied such that the value of the DC voltage ($U_1$) depends on at least one state of the DC voltage grid (1) and information about the state is transmitted to the electrical components (3, 4, 5, 7) of the DC voltage grid (1) by way of the DC voltage ($U_1$).

**2.** DC voltage grid (1) according to claim 1, wherein one of the electrical components (3, 4, 5, 7) is a protective device (7) of the DC voltage grid (1).

**3.** DC voltage grid (1) according to claim 2, wherein the protective device (7) is arranged at a distance of more than 10 m, in particular at a distance of more than 100 m, from the remaining electrical components (3, 4, 5, 7).

**4.** DC voltage grid (1) according to one of claims 1 to 3, wherein the electrical components (3, 4, 5, 7) comprise an energy storage unit (4) and an electrical consumer (5).

**5.** DC voltage grid (1) according to one of claims 1 to 4, wherein at least some of the electrical components are formed by wind turbines as energy sources (3), wherein the wind turbines in each case have a blade adjustment facility, the regulation of which is designed to adjust the blades as a function of the value of the DC voltage ($U_1$).

**6.** Wind farm with a DC voltage grid (1) according to claim 5.

**7.** Method for operating a DC voltage grid (1) according to one of claims 1 to 5 or a wind farm according to claim 6, wherein the DC voltage ($U_1$) of the DC voltage grid (1) is controlled or regulated as a function of a state of the DC voltage grid (1).

**8.** Method according to claim 7, wherein the operating behaviour of at least some of the electrical components (3, 4, 5, 7) is changed as a function of the value of the DC voltage ($U_1$).

**9.** Method according to one of claims 7 or 8, wherein the DC voltage grid (1) has an energy storage unit (4) according to claim 4, wherein the DC voltage ($U_1$) is raised as the state of charge (SoC) of the energy storage unit (4) increases.

**10.** Method according to one of claims 7 to 9, wherein the DC voltage grid (1) has an energy source (3), in particular a wind turbine according to claim 5, wherein the DC voltage ($U_1$) is raised as the capacity utilisation of the energy source (3) decreases.

**11.** Method according to one of claims 7 to 10, wherein some of the energy sources (3) of the DC voltage grid (1) are deactivated when a first threshold value is exceeded.

**12.** Method according to one of claims 7 to 11, wherein at least some of the energy storage units (4) are discharged when a second threshold value is fallen below.

**13.** Method according to one of claims 7 to 12, wherein some of the electrical consumers (5) are operated with reduced power or deactivated when a third threshold value is fallen below.

**14.** Method according to one of claims 7 to 13, wherein the protective device (7) according to claim 2 is activated when a safety threshold value of the DC voltage ($U_1$) is exceeded or fallen below.

**15.** Method according to one of claims 7 to 14, wherein the blades of the wind turbine according to claim 5 are adjusted as a function of the value of the DC voltage ($U_1$).

**Revendications**

**1.** Réseau (1) à tension continue comportant des composants (3, 4, 5, 7) électriques, qui sont connectés électriquement entre eux au moyen d'un conducteur (6), dans lequel le réseau (1) à tension continue peut fonctionner avec une tension ($U_1$) continue entre des parties (61, 62) du conducteur (6), dans lequel le réseau (1) à tension continue a un régleur (2), par lequel la tension ($U_1$) continue du réseau (1) à tension continue peut varier, de manière à ce que la valeur de la tension ($U_1$) continue dépende d'au moins un état du réseau (1) à tension continue et une information sur l'état est transmise au moyen de la tension ($U_1$) continue aux composants (3, 4, 5, 7) électriques du réseau (1) à tension continue.

**2.** Réseau (1) à tension continue suivant la revendication 1, dans lequel l'un des composants (3, 4, 5, 7) électriques représente un dispositif (7) de protection du réseau (1) à tension continue.

**3.** Réseau (1) à tension continue suivant la revendication 2, dans lequel le dispositif (7) de protection est monté à une distance de plus de 10 m, en particulier à une distance de plus de 100 m, des autres composants (3, 4, 5, 7) électriques.

**4.** Réseau (1) à tension continue suivant l'une des revendications 1 à 3, dans lequel les composants (3, 4, 5, 7) électriques comprennent un accumulateur (4) d'énergie et un consommateur (5) électrique.

**5.** Réseau (1) à tension continue suivant l'une des revendications 1 à 4, dans lequel au moins une partie des composants électriques est formée par des éoliennes, comme sources (3) d'énergie, dans lequel l'éolienne a respectivement un réglage de pales, dont le réglage est conçu pour régler les pales en fonction de la valeur de la tension ($U_1$) continue.

**6.** Parc d'éoliennes ayant un réseau (1) à tension continue suivant la revendication 5.

**7.** Procédé pour faire fonctionner un réseau (1) à tension continue suivant l'une des revendications 1 à 5 ou un parc d'éoliennes suivant la revendication 6, dans lequel on commande ou on règle la tension ($U_1$) continue du réseau (1) à tension continue, en fonction d'un état du réseau (1) à tension continue.

**8.** Procédé suivant la revendication 7, dans lequel on modifie le comportement de fonctionnement d'au moins une partie des composants (3, 4, 5, 7) électriques en fonction de la valeur de la tension ($U_1$) continue.

**9.** Procédé suivant l'une des revendications 7 ou 8, dans lequel le réseau (1) à tension continue a un accumulateur (4) d'énergie suivant la revendication 4, dans lequel on élève la tension ($U_1$) continue au fur à mesure qu'augmente le degré (SoC) de remplissage de l'accumulateur (4) d'énergie.

**10.** Procédé suivant l'une des revendications 7 à 9, dans lequel le réseau (1) à tension continue a une source (3) d'énergie, en particulier une éolienne suivant la revendication 5, dans lequel on élève la tension ($U_1$) continue au fur et à mesure que diminue la charge utilisable de la source (3) d'énergie.

**11.** Procédé suivant l'une des revendications 7 à 10, dans lequel, si une première valeur limite est dépassée, on met hors circuit une partie des sources (3) d'énergie du réseau (1) à tension continue.

**12.** Procédé suivant l'une des revendications 7 à 11, dans lequel, si on passe en-dessous d'une deuxième valeur limite, on décharge au moins une partie de l'accumulateur (4) d'énergie.

13. Procédé suivant l'une des revendications 7 à 12, dans lequel, si une troisième valeur limite est dépassée, on fait fonctionner à une puissance réduite ou on met à l'arrêt une partie des consommateurs (5) électriques.

14. Procédé suivant l'une des revendications 7 à 13, dans lequel, si l'on passe au-dessus ou en-dessous d'une valeur limite de sécurité de la tension ($U_1$) continue, on active le dispositif (7) de protection suivant la revendication 2.

15. Procédé suivant l'une des revendications 7 à 14, dans lequel on règle les pales de l'éolienne suivant la revendication 5, en fonction de la valeur de la tension ($U_1$) continue.

# FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6624533 B1
- US 2016018837 A